# EUROPÄISCHE PATENTSCHRIFT

(11) **EP 0 616 143 B1**
(45) Veröffentlichungstag und Bekanntmachung des Hinweises auf die Patenterteilung: **15.05.1996**
(21) Anmeldenummer: 94102143.8
(22) Anmeldetag: 11.02.1994
(51) Int. Cl.: F16D 65/12

(54) **Bremsscheibe für Scheibenbremsen, insbesondere Radbremsscheibe für Schienenfahrzeuge**
Brake disc for disc brakes, particularly wheel brake disc for railway vehicles
Disque de frein pour freins à disque, notamment disque de frein de roue pour véhicules ferroviaires

(30) Priorität: 19.03.1993 DE 4308910
(43) Veröffentlichungstag der Anmeldung: 21.09.1994
(73) Patentinhaber: KNORR-BREMSE AG, D-80809 München (DE)
(72) Erfinder: Wirth, Xaver, Dr., D-85737 München (DE)

(56) Entgegenhaltungen:
- EP-B- 0 159 639
- DE-A- 2 819 832
- DE-B- 2 447 555

## Beschreibung

Die Erfindung betrifft eine Bremsscheibe für Scheibenbremsen, insbesondere Radbremsscheibe für Schienenfahrzeuge, mit einem einseitig von wenigstens einer Bremsbacke beaufschlagbaren Reibring, der aus wenigstens zwei Ringsegmenten besteht, deren jedes Ringsegment an einem Tragkörper gehaltert ist, und mit an den Stoßstellen der Ringsegmente deren gegenüberstehende Enden verbindenden, zumindest radiale Relativverschiebungen der Ringsegmente ausschließenden Verbindungselementen.

Derartige Bremsscheiben sind in Ausbildung als geteilte Radbremsscheiben bereits vielfach bekannt, wobei der Tragkörper oftmals von der Radscheibe eines Schienenfahrzeugrades gebildet wird. Eine derartige, den eingangs genannten Merkmalen entsprechende Bremsscheibe ist beispielsweise aus Figur 4 der DE-B 21 33 235 bekannt. Die beiden Ringsegmente des Reibringes sind hierbei vermittels achsparalleler Schrauben und Spannhülsen an der Radscheibe gehaltert, die einen Luftspalt aufweisenden Stoßstellen der Ringsegmente sind von als tangentiale Bolzen ausgebildeten Verbindungselementen überbrückt, wobei die Bolzen mit ihren Enden in entsprechende Sackbohrungen an den Stirnflächen der Ringsegmente eingreifen. Bei hohen Raddrehzahlen versuchen die auf den Reibring bzw. dessen Ringsegmente einwirkenden Fliehkräfte diesen bzw. diese insbesondere an den durch die Stoßstellen bedingten Schwachstellen aufzuweiten. Die die Stoßstellen überbrückenden Bolzen vermögen derartige Aufweitungen infolge ihrer tangentialen Ausrichtung nicht zu behindern, unter teilweisem Austreten der Bolzen aus den Sackbohrungen können sich dabei die Luftspalte an den Stoßstellen in unerwünschter Weise verbreitern.

Es sind auch bereits Radbremsscheiben der vorstehend beschriebenen Art bekannt, bei welchen als Verbindungselmente zwischen den Ringsegmenten anstelle der beschriebenen Bolzen tangential ausgerichtete Verschraubungen zwischen den Ringsegmenten vorgesehen sind. Derartige Verschraubungen benötigen jedoch einen relativ großen Raum, sie sind daher nur realisierbar, wenn die Reibringe belüftet ausgebildet, das heißt auf ihrer bremsbackenabgewandten Seite mit radialen Kühlrippen ausgestattet sind bzw. wenn an den Reibringen auf deren Rückseite genügend Platz für diese Verschraubungen vorhanden ist. Bei unbelüfteten Reibringen oder Reibringen mit nur kurzen Kühlrippen lassen sich derartige Verschraubungen nicht anordnen.

Weiterhin ist es bekannt, bei geteilten Reibringen für Bremsscheiben in den einander gegenüberstehenden Stirnflächen der Ringsegmente jeweils einander gegenüberstehend zumindest annähernd halbzylindrische Ausnehmungen anzuordnen, in welche ein zylindrischer oder kreisscheibenartiger Körper eingesetzt ist, welcher die jweils benachbarten Ringsegmente gegenseitig sowohl in Umfangsrichtung gegeneinander abstützt als auch radiale Relativverschiebungen ausschließt. Es wird hierzu auf die DE-B 22 30 805 und 24 47 555 und die DE-OS 26 20 623 verwiesen.

Es ist Aufgabe der Erfindung, eine Bremsscheibe der eingangs genannten Art mit einfachen Mitteln derart auszugestalten, daß sich die Stoßstelle zwischen zwei Ringsegmenten auch bei Auftreten hoher Fliehkräfte bzw. anderweitiger Kräfte nicht aufweiten kann, wobei zugleich relative Radialverschiebungen ausgeschlossen werden und wobei für die Verbindungselemente praktisch kein zusätzlicher Bauraum erforderlich ist, so daß die Bremsscheibe auch unbelüftet oder mit nur kurzen Kühlrippen ausgebildet werden kann.

Diese Aufgabe wird nach der Erfindung dadurch gelöst, daß der Reibring auf zumindest einer Seite zu dieser offene, zu den Stoßstellen der Ringsegmente symmetrisch und diese Stoßstellen überbrückend angeordnete Ringnuten aufweist, deren Achsen parallel zur Achse des Reibringes verlaufen und deren Tiefe geringer als die axiale Breite der Ringsegmente ist, und daß in jede Ringnut ein diese zumindest annähernd vollständig ausfüllender, die Stoßstelle überbrückender Ringkörper eingesetzt ist.

Durch diese Ausbildung der Bremsscheibe wird an den Stoßstellen eine nicht nur auf Druck- und Scher- bzw. radiale Verschiebungskräfte belastbare Verbindung zwischen den Ringsegmenten geschaffen, sondern die Verbindung vermag auch Zugkräfte aufzunehmen; die benachbarten Ringsegmente erhalten hierdurch eine feste, aber doch gelenkige Zuordnung zueinander, derart, daß ihre Halterung am Tragkörper von bestimmten Belastungskomponenten, wie beispielsweise fliehkraftbedingten Beanspruchungen, entlastet ist und dementsprechend schwächer bzw. kleiner dimensionierbar ist. Es ist wesentlich, daß durch die die Ringsegmente verbindenden Ringkörper temperaturbedingte Abweichungen der Ringsegmente von ihrer kreisabschnittartigen Sollgestalt nicht behindert werden, da die durch die Ringkörper gebildeten Verbindungselemente als Gelenkstellen wirken, welche relative Drehbewegungen der in den Stoßstellen einander gegenüberstehenden Stirnflächen der Ringsegmente um die Achse der Ringkörper in begrenztem Maße erlauben.

Die Unteransprüche zeigen nach der weiteren Erfindung vorteilhafte und zweckmäßige Ausgestaltungsmöglichkeiten für eine derartige Bremsscheibe auf.

In den Zeichnungen sind Ausführungsbeispiele für nach der Erfindung ausgebildete Bremsscheiben dargestellt, und zwar zeigt
- Fig.1: eine Radbremsscheibe an einem Schienenfahrzeugrad,
- Fig.2: in vergrößertem Maßstab eine abgewandelte Ausführungsform,
wobei lediglich ein eine Stoßstelle beinhaltender Teilausschnitt dargestellt ist,
- Fig.3: einen Schnitt gemäß der Linie A-A in Figur 2 in nochmals vergrößertem Maßstab und
- Fig.4: einen der Figur 2 entsprechenden Teilausschnitt einer abermals abgewandelten Ausführungsform.

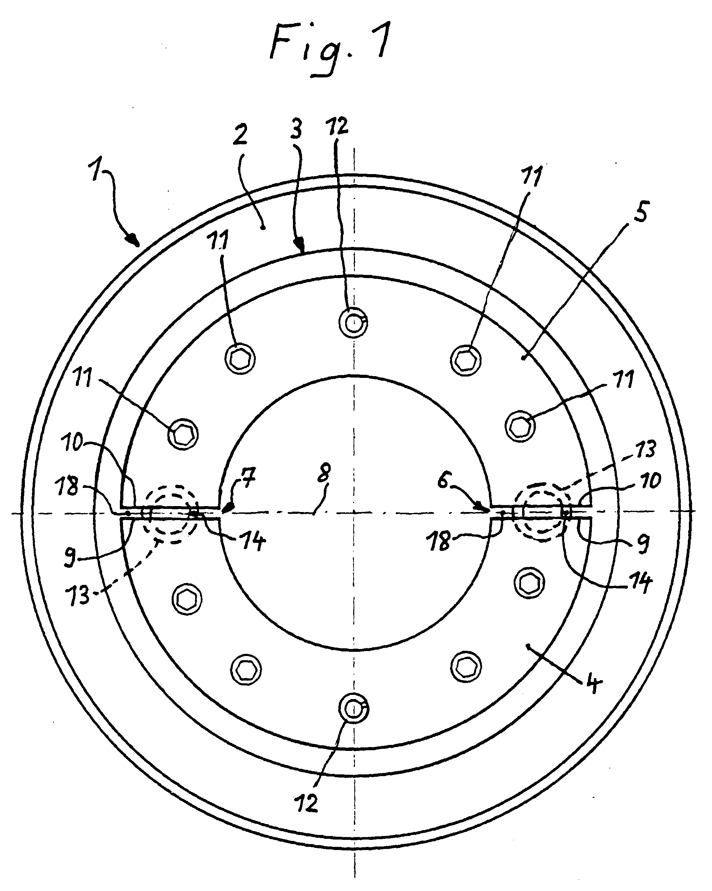

Die Figur 1 zeigt ein Rad 1 eines Schienenfahrzeuges, welches zur Bildung einer Bremsscheibe an seiner Radscheibe 2 einen Bremsring 3 trägt; der Nabenteil des Rades 1 ist nicht dargestellt. Der Bremsring 3 ist in zwei halbringartige Ringsegmente 4 und 5 unterteilt, die Stoßstellen 6 und 7 der beiden Ringsegmente 4 und 5 liegen in einer gemeinsamen, die Achse des Rades 1 beinhaltetenden Ebene 8. In den Stoßstellen 6 und 7 stehen die Stirnflächen 9 und 10 der Ringsegmente 4 und 5 einander im wesentlichen zueinander parallel verlaufend mit Abstand gegenüber. Die beiden Ringsegmente 4 und 5 sind vermittels zur Achse des Rades 1 paralleler Schrauben 11 bzw. Spannhülsen 12 an der Radscheibe 2 gehaltert. Zum Bremsen ist an den Reibring 3 wie üblich eine nicht dargestellte Bremsbacke anpreßbar. Der Radscheibe 2 zugewandt kann der Reibring 3 bzw. können die diesen bildenden Ringsegmente 4 und 5 mit Ventilationseinrichtungen, beispielsweise radialgerichteten Kühlluftrippen zur Förderung eines Kühlluftstromes zwischen Reibring 3 und Radscheibe 2 versehen sein. Auf seiner der Figur 1 abgewandten Seite kann das Rad 1 mit einer dem Reibring 3 entsprechenden Reibringanordnung versehen sein.

Insoweit entspricht die Bremsscheibe dem Stand der Technik, wie er beispielsweise durch Figur 1 der vorstehend bereits erwähnten DE-B 21 33 235 gegeben ist.

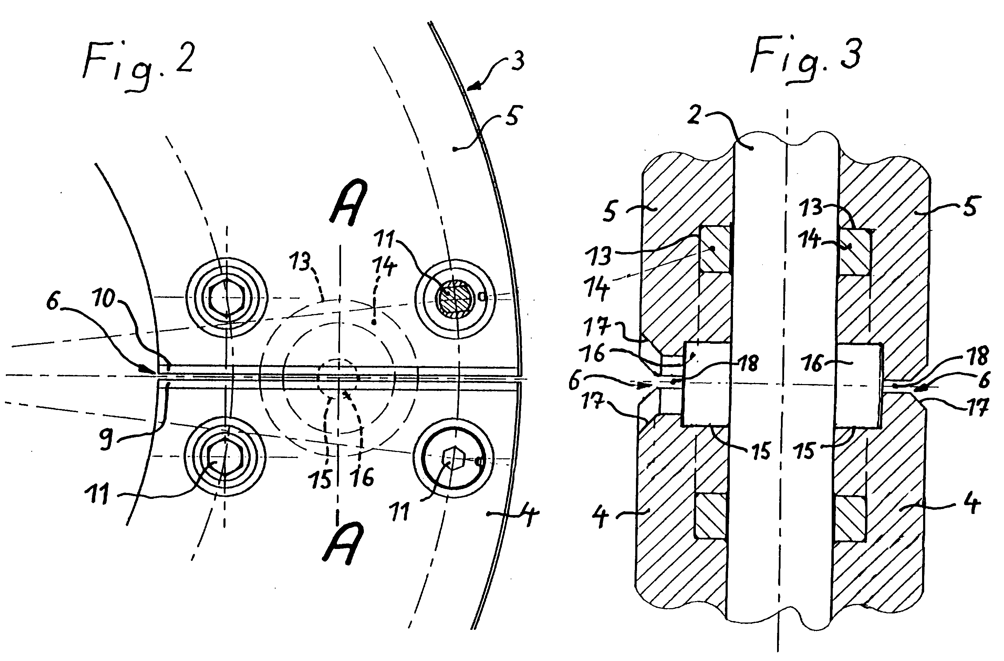

Auf der der Radscheibe 2 zugewandten Seite sind die Ringsegmente 4 und 5 im Bereich der Stoßstellen 6 und 7 mit je einem etwa halbkreisförmigen Ringnutabschnitt versehen, deren Mündungen in den Stirnflächen 9 und 10 fluchtend einander gegenüberstehen und die miteinander eine die Stoßstelle 6 bzw. 7 überbrückende Ringnut 13 bilden. In die beiden Ringnuten 13 ist je ein Ringkörper 14 eingesetzt, welcher die jeweilige Ringnut zumindest annähernd vollständig ausfüllt; der Ringkörper 14 kann dabei mit oder ohne Vorspannung in der Ringnut 13 liegen, das heißt, er kann mit bestimmter Pressung oder mit Schiebesitz sich in der Ringnut 13 befinden. Im Schnittbild der Figur 3 ist der in die Ringnut 13 eingesetzte Ringkörper 14 klar ersichtlich.

Die Ringkörper 14 verbinden die beiden Ringsegmente 4 und 5 an deren Stoßstellen 6 und 7 derart, daß Zug-, Druck- und in radialer Richtung wirkende Scherkräfte zwischen den Stirnflächen 9 und 10 übertragen werden, die Stirnflächen 9 und 10 sich jedoch aus ihrer zur Ebene 8 parallelen Lage um die Achse des zugeordneten Ringkörpers 14 geringfügig herausdrehen können. Hierdurch wird erreicht, daß ein radiales Versetzen der Ringsegment-Enden relativ zueinander ausgeschlossen wird und daß der mittlere Abstand der einander gegenüberstehenden Stirnflächen 9 und 10, also der Luftspalt (18) an den Stoßstellen 6 und 7, sich weder vergrößern noch verkleinern kann, obwohl begrenzte Drehungen der Stirnflächen 9 und 10 relativ zueinander möglich sind. Hieraus ergibt sich, daß ein Aufweiten der Ringsegmente 4 und 5 unter der Einwirkung von Fliehkräften bei hohen Drehzahlen unter Vergrößern des Luftspaltes (18) an den Stoßstellen 6 und 7 ausgeschlossen ist, wodurch die Halterungselemente, das heißt die Schrauben 11 bzw. die Spannhülsen 12, von derartigen, zusätzlichen Beanspruchungen weitgehend freigehalten werden. Andererseits sind jedoch wärmebedingte Dehnungen der Ringsegmente 4 und 5 unter geringer Relativverdrehungen der Stirnflächen 9 und 10 zueinander ohne Verspannungen möglich.

Das Herstellen der Bremsscheibe kann aus einem geschlossenen Reibring erfolgen, die Fertigung von Bremsscheiben mit ungeteilten und geteilten Reibringausführungen kann also aus nur einer Art von Rohteilen erfolgen. Die Ringnuten 13 können dabei zweckmäßig in den noch ungeteilten Reibring eingebracht werden, anschließend ist der Reibring 3 durch Schnitte in die Ringsegmente 4 und 5 zu unterteilen. Die Ringkörper 14 sind anschließend einzubringen, sie können aus einem zum Material des Reibringes 4 abweichenden Werkstoffs, beispielsweise einem hochfesten Material, hergestellt sein. Abweichend zur Darstellung nach Figur 1 ist es selbstverständlich auch möglich, den Reibring 3 in mehr als zwei Ringsegmente 4 und 5 aufzuteilen.

Im Ausführungsbeispiel nach Figur 1 befinden sich die Ringnuten 13 auf der von der Bremsbacke nicht beaufschlagten Seite des Reibringes 3; sie können sich jedoch mitsamt den in ihnen befindlichen Ringkörpern 14 auch alleine oder zusätzlich auf der bremsbackenbeaufschlagten Seite des Reibringes befinden. Weiterhin ist nach dem Ausführungsbeispiel an der Stoßstelle 6 bzw. 7 nur eine Ringnut 13 mit einem Ringkörper 14 vorgesehen, wobei der Außendurchmesser der Ringnut 13 etwa der Hälfte der radialen Breite des Reibringes 3 entspricht und wobei die Ringnut 13 mittig zur radialen Breitenerstreckung des Reibringes 3 angeordnet ist. Abweichend hierzu ist es auch möglich, über die radiale Breite des Reibringes 3 verteilt mehrere im Durchmesser kleinere Ringnuten 13 mit Ringkörper 14 anzuordnen, wobei allerdings die Relativdrehbarkeit der Stirnflächen 9 und 10 ausgeschlossen wird. Um diese beizubehalten, können auch gleichachsig zueinander, also zueinander konzentrisch mehrere Ringnuten 13 mit Ringkörpern 14 jeweils unterschiedlichen Durchmessers angeordnet sein. Die axiale Tiefe der Ringnuten 13 auf der nichtbeaufschlagten Seite des Reibringes 3 wird dabei zweckmäßig derart bemessen, daß sie geringer ist als die axiale Breite der Ringsegmente 4 bzw. 5 in deren Verschleißendzustand. Hierdurch wird ausgeschlossen, daß die Ringnuten 13 bei Verschleiß des Reibringes 3 aufgeschliffen werden.

Die Ausführung der Bremsscheibe gemäß den Figuren 2 und 3 entspricht weitgehend der Ausführung nach Figur 1. Die Ringsegmente 4 und 5 sind nahe der Stoßstellen, in den Figuren 2 und 3 ist nur die Stoßstelle 6 dargestellt, mittels jeweils zweier als bolzenartige Halterungselemente dienender Schrauben 11 gehaltert: An jedem Ende eines Ringsegments 4 bzw. 5 sind radial zur Ringnut 13 versetzt jeweils zwei Schrauben 11 als Halterungselemente angeordnet, wobei diese nicht gleichartig ausgebildet sein müssen. Die Halterungselemente können dabei zweckmäßig in bekannter Weise geeignet zur Aufnahme von Wärmedehnungen gestaltet sein, das aufgeschnittene Halterungselement zeigt beispielsweise einen Aufbau gemäß der EP-B 0 159 639.

Bei der Bremsscheibe nach Figur 2 und 3 ist der Reibring 3 mit zu den Ringnuten 13 koaxialen, zylindrischen Ausnehmungen 15 versehen, die jeweils zumindest annnähernd halbzylindrisch in die einander gegenüberstehenden Stirnflächen 9 und 10 zweier Ringsegmente 4 und 5 eingreifen und deren Durchmesser kleiner ist als der Innendurchmesser der Ringnuten 13. Die Ausnehmungen 15 sind zumindest zur nichtbeaufschlagten Seite des Reibringes 3 hin offen, wie es Figur 3 zeigt; gemäß der linksseitigen Darstellung der Figur 3 können die Ausnehmungen 15 mit verringertem Durchmesser auch zur bremsbackenbeaufschlagten Seite des Reibringes 3 hin offen sein, wobei die Öffnung etwa für die Tiefe des Verschleißbereiches des Reibringes 3 angefast ist. In den zylindrischen Ausnehmungen 15 befindet sich je eine Kreisscheibe 16, welche ihre Ausnehmung 15 zumindest nahezu vollständig ausfüllt. Aus den Figuren 2 und 3 ist weiterhin ersichtlich, daß der Übergang von der bremsbackenbeaufschlagbaren Fläche der Ringsegmente 4 und 5 zu deren Stirnflächen 9 und 10 vermittels Schrägflächen 17 gefast ist.

In Abänderung ist es möglich, die zylindrische Ausnehmung 15 durch eine kugelförmige Ausnehmung und die Kreisscheibe 16 durch eine Kugel zu ersetzen, welche die kugelförmige Ausnehmung zumindest nahezu vollständig ausfüllt.

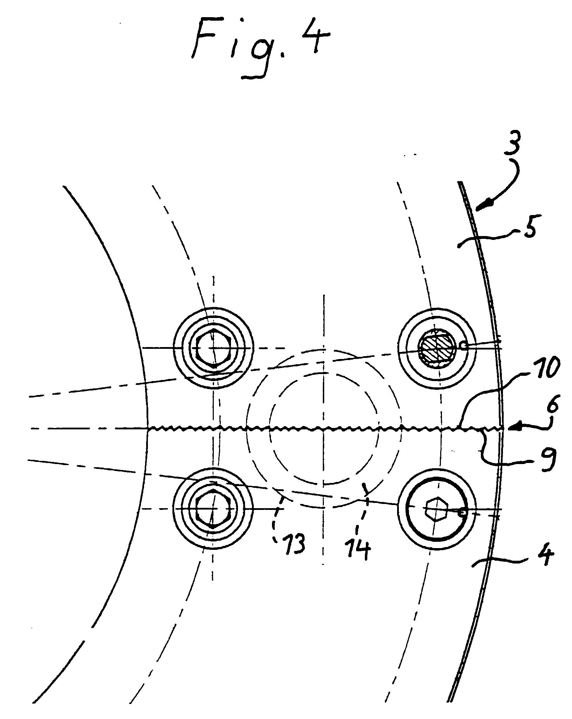

Die vorstehend beschriebenen Ausführungsbeispiele weisen an den Stoßstellen 6 und 7 jeweils Luftspalte 18 auf, wie sie aus Figur 2 und 3 deutlich ersichtlich sind. Um die Ringsegmente 4 und 5 zu einem weitgehend in sich starren Reibring 3 zusammenzufügen, ist eine Ausbildung gemäß Figur 4 zweckmäßig. Bei der Ausführung nach Figur 4 sind an den Stoßstellen, es ist nur die Stoßstelle 6 dargestellt, die gegenüberstehenden Stirnflächen 9 und 10 der beiden Ringsegmente 4 und 5 vermittels einer Verzahnung ineinander eingreifend und aneinander anliegend ausgebildet. In Verbindung mit den in die Ringnut 13 eingesetzten Ringkörper 14 gewährleistet die Verzahnung die Aufnahme bzw. Übertragung großer Scherkräfte an der Stoßstelle 6. Die Verzahnung läßt sich beim Fertigen der Ringsegmente 4 und 5 durch Brechen eines geschlossen ringförmigen Ausgangkörpers erzielen: die Bruchrauhigkeit stellt hierbei eine ausgezeichnete Verzahnung in allen Richtungen der Ebene der Stoßstelle 6 dar.

Abweichend zu den vorstehend beschriebenen Ausführungsbeispielen kann der in eine Ringnut 13 eingesetzte Ringkörper 14 aus mehreren konzentrischen Einzelringen zusammengesetzt sein. Hierdurch wird der Ringkörper 14 in seinem Querschnitt biegeweicher, wodurch er sich gegebenenfalls auftretenden, elastischen Verformungen der Ringnut 13 besser anpassen kann. Es ist auch möglich, den Ringkörper 14 aus einem Faserverbundwerkstoff zu fertigen. Der Querschnitt der Ringnut 13 und des Ringkörpers 14 können von der in Figur 3 dargestellten Rechteckgestalt abweichen, er kann halbkreisförmig oder U-förmig oder dergleichen sein. Unter Inkaufnahme eines nicht vollständigen Ausfüllens der dargestellten Ringnut kann der Ringkörper 14 auch einen kreisförmigen oder ovalen Querschnitt aufweisen.

Die erfindungsgemäße Ausbildung ist hinsichtlich der Stoßstellen auch bei Achsbremsscheiben mit geteiltem Reibring möglich, der Tragkörper gehört dabei im allgemeinem einem Nabenteil zu.

### Bezugszeichenliste

- 1: Rad
- 2: Radscheibe
- 3: Reibring
- 4: Ringsegment
- 5: Ringsegment
- 6: Stoßstelle
- 7: Stoßstelle
- 8: Ebene
- 9: Stirnfläche
- 10: Stirnfläche
- 11: Schraube
- 12: Spannhülse
- 13: Ringnut
- 14: Ringkörper
- 15: Ausnehmung
- 16: Kreisscheibe
- 17: Schrägfläche
- 18: Luftspalt

## Patentansprüche

1. Bremsscheibe für Scheibenbremsen, insbesondere Radbremsscheibe für Schienenfahrzeuge, mit einem einseitig von wenigstens einer Bremsbacke beaufschlagbaren Reibring (3), der aus wenigstens zwei Reibringsegmenten (4,5) besteht, deren jedes Ringsegment (4,5) an einem Tragkörper (Radscheibe 2) gehaltert ist, und mit an den Stoßstellen (6,7) der Ringsegmente (4,5) deren gegenüberstehende Enden verbindenden, zumindest radiale Relativverschiebungen der Ringsegmente (4,5) ausschließenden Verbindungselementen, dadurch gekennzeichnet, daß der Reibring (3) auf zumindest einer Seite zu dieser offene, zu den Stoßstellen (6,7) der Ringsegmente (4,5) symmetrisch und diese Stoßstellen (6,7) überbrückend angeordnete Ringnuten (13) aufweist, deren Achsen parallel zur Achse des Reibringes (3) verlaufen und deren Tiefe geringer als die axiale Breite der Ringsegmente (4,5) ist, und daß in jede Ringnut (13) ein diese zumindest annähernd vollständig ausfüllender, die Stoßstelle (6,7) überbrückender Ringkörper (14) eingesetzt ist, der aus mehreren konzentrischen Einzelringen zusammengesetzt sein kann.

2. Bremsscheibe nach Anspruch 1, dadurch gekennzeichnet, daß sich die Ringnuten (13) nur auf der nichtbeaufschlagten Seite des Reibringes (3) befinden und daß ihre Tiefe geringer als die axiale Breite der Ringsegmente (4,5) in deren Verschleißendzustand ist.

3. Bremsscheibe nach Anspruch 1 oder 2, dadurch gekennzeichnet, daß je Stoßstelle (6,7) eine Ringnut (13) mit einem Ringkörper (14) vorgesehen ist, deren gemeinsame Achse, bezogen auf die zur Bremsscheibe radiale Erstreckung der Stoßstelle (6,7), im mittleren Bereich der Stoßstelle (5,7) verläuft.

4. Bremsscheibe nach Anspruch 3, dadurch gekennzeichnet, daß der äußere Durchmesser der Ringnut (13) etwa der halben, radialen Breite der Ringsegmete (4,5) entspricht.

5. Bremsscheibe nach Anspruch 4, dadurch gekennzeichnet, daß die Ringsegmente (4,5) nahe der Stoßstellen (6,7) und zu den Ringnuten (13) radial versetzt vermittels im wesentlichen bolzenartiger Halterungselemente (Schrauben 11, Spannhülsen 12) mit dem Tragkörper (Radscheibe 2) verbunden sind.

6. Bremscheibe nach einem der Ansprüche 3, 4 oder 5, dadurch gekennzeichnet, daß der Reibring (3) mit zu den Ringnuten (13) koaxialen, zylindrischen Ausnehmungen (15) versehen ist, die jeweils zuminderst nahezu halbzylindrisch in die einander gegenüberstehenden Stirnflächen (9,10) zweier Ringsegmente (4,5) eingreifen, deren Durchmesser kleiner als der Innendurchmesser der Ringnuten (13) ist und welche zumindest zur nichtbeaufschlagten Seite des Reibringes (3) offen sind, und daß in jede zylindrische Ausnehmung (15) eine diese zumindest nahezu vollständig ausfüllende Kreisscheibe (16) eingesetzt ist (Figur 2,3).

7. Bremsscheibe nach Anspruch 6, dadurch gekennzeichnet, daß die zylindrischen Ausnehmungen (15) zur bremsbackenbeaufschlagbaren Seite des Reibringes (3) hin mit verringertem Durchmesser offen sind und für annähernd die Tiefe des Verschleißbereiches des Reibringes (3) angefast enden.

8. Bremsscheibe nach einem der Ansprüche 3, 4 oder 5, dadurch gekennzeichnet, daß der Reibring mit zentrisch zu den Ringnuten liegenden, kugelartigen Ausnehmungen versehen ist, welche jeweils halbkugelig in die einander gegenüberstehenden Stirnflächen zweier Ringsegmente eingreifen, deren Durchmesser kleiner als der Innendurchmesser der Ringnuten ist, und daß in jede kugelartige Ausnehmung eine diese zumindest nahezu vollständig ausfüllende Kugel eingesetzt ist.

9. Bremsscheibe nach einem oder mehreren der vorstehenden Ansprüche, dadurch gekennzeichnet, daß die Stoßstellen (6,7) einen Luftspalt (18) zwischen den gegenüberstehenden Stirnflächen (9,10) zweier Ringsegmente (4,5) aufweisen, der von dem Ringkörper (14) und bei Ausbildung nach Anspruch 5 zusätzlich der Kreisscheibe (16) überbrückt ist.

10. Bremsscheibe nach Anspruch 9, dadurch gekennzeichnet, daß der Übergang von der bremsbackenbeaufschlagbaren Fläche eines Ringsegmentes (4,5) zu dessen Stirnfläche (9,10) vermittels einer Schrägfläche (17) gefast ist (Figur 3).

11. Bremsscheibe nach einem oder mehreren der Ansprüche 1 bis 8, dadurch gekennzeichnet, daß in den Stoßstellen (6) die gegenüberstehenden Stirnflächen (9,10) zweier Ringsegmente (4,5) mit einer Verzahnung ineinandergreifend aneinander anliegend (Figur 4).

12. Bremsscheibe nach Anspruch 11, dadurch gekennzeichnet, daß die beiden Ringsegmente (4,5) durch Brechen eines Ringkörpers gefertigt sind, wobei die Bruchrauhigkeit die Verzahnung bildet (Figur 4).

## Claims

1. Brake disc for disc brakes, in particular a wheel brake disc for rail vehicles, having a friction ring (3) which can be acted on by at least one brake shoe and comprises at least two friction ring segments (4, 5), each ring segment (4, 5) of which is mounted on a carrier body (wheel disc 2), and having connecting elements at the intersections (6, 7) of the ring segments (4, 5) which join their opposite ends and exclude at least radial relative movements of the ring segments (4, 5), characterised in that the friction ring (3) has annular grooves (13) on at least one side open to this side, symmetrical to the intersections (6, 7) of the ring segments (4, 5), and bridging these intersections (6, 7), the axes of these annular grooves (13) extending parallel to the axis of the friction ring (3) and their depth being less than the axial width of the ring segments (4, 5), and in that into each annular groove (13) there is inserted an annular body (14) which fills this groove at least almost completely and bridges the intersection (6, 7) and which may be composed of several concentric individual rings.

2. Brake disc according to claim 1, characterised in that the annular grooves (13) are located only on the side of the friction ring (3) not acted on and in that their depth is less than the axial width of the ring segments (4, 5) in their final wear state.

3. Brake disc according to claim 1 or 2, characterised in that an annular groove (13) with an annular body (14) is provided for each intersection (6, 7), the common axis extending in the central region of the intersection (6, 7) with respect to the radial extension of the intersection (6, 7) towards the brake disc.

4. Brake disc according to claim 3, characterised in that the outer diameter of the annular groove (13) corresponds approximately to half the radial width of the ring segments (4, 5).

5. Brake disc according to claim 4, characterised in that in the vicinity of the intersections (6, 7) and radially offset to the annular grooves (13) the ring segments (4, 5) are connected to the carrier body (wheel disc 2) by means of substantially pin-like retaining elements (screws 11, clamping sleeves 12).

6. Brake disc according to one of claims 3, 4 or 5, characterised in that the friction ring (3) is provided with cylindrical recesses (15), coaxial with the annular grooves (13), which respectively engage at least semi-cylindrically into the facing ends (9, 10) of two ring segments (4, 5), the recesses having a diameter smaller than the inner diameter of the annular grooves (13) and being open at least towards the side of the friction ring (3) not acted on, and in that inserted into each cylindrical recess (15) is a circular disc (16), at least almost completely filling it (Figure 2, 3).

7. Brake disc according to claim 6, characterised in that the cylindrical recesses (15) are open, with a reduced diameter, to the side of the friction ring (3) which can be acted on by the brake shoe, their ends being chamfered for about the depth of the wear region of the friction ring (3).

8. Brake disc according to one of claims 3, 4 or 5, characterised in that the friction ring is provided with spherical recesses, located centrally with respect to the annular grooves, which respectively engage hemispherically into the facing ends of two annular segments, the recesses having a diameter smaller than the inner diameter of the annular grooves, and in that inserted into each spherical recess is a sphere which fills it at least almost completely.

9. Brake disc according to one of the preceding claims, characterised in that the intersections (6, 7) have an air gap (18) between the facing ends (9, 10) of two ring segments (4, 5) which is bridged by the annular body (14) and, in the case of the construction according to claim 5, additionally the circular disc (16).

10. Brake disc according to claim 9, characterised in that the transition from the surface of a ring segment (4, 5) that can be acted on by the brake shoe to its end surface (9, 10) is chamfered by means of an inclined surface (17) (Figure 3).

11. Brake disc according to one or more of claims 1 to 8, characterised in that at the intersections (6) the opposing ends (9, 10) of two ring segments (4, 5) are adjacent and engage into each other with teeth (Figure 4).

12. Brake disc according to claim 11, characterised in that the two ring segments (4, 5) are produced by breaking an annular body, the roughness of the fracture forming the teeth (Figure 4).

## Revendications

1. Disque de frein pour freins à disque, notamment disque de frein de roue pour véhicules sur rails, avec un anneau de friction (3), pouvant être chargé d'un côté par au moins une mâchoire de frein, qui est constitué par au moins deux segments d'anneau de friction (4, 5), chaque segment d'anneau (4, 5) étant monté sur un corps porteur (disque de roue 2), et avec des éléments de raccord, qui relient, aux zones de joint (6, 7) des segments d'anneau (4, 5), leurs extrémités en vis-à-vis et qui excluent au moins des translations relatives radiales des segments d'anneau (4, 5), caractérisé en ce que l'anneau de friction (3) présente, sur au moins un côté, des rainures annulaires (13) ouvertes vers ce côté, symétriques par rapport aux zones de joint (6, 7) des segments d'anneau (4, 5) et disposées à cheval sur ces zones de joint (6, 7), rainures dont les axes sont parallèles à l'axe de l'anneau de friction (3) et dont la profondeur est inférieure à la largeur axiale des segments d'anneau (4, 5) et en ce qu'un corps annulaire (14) est mis en place dans chaque rainure annulaire (13) en la remplissant au moins approximativement entièrement et en étant à cheval sur la zone de joint (6, 7), corps annulaire qui peut être composé de plusieurs anneaux individuels concentriques.

2. Disque de frein selon la revendication 1, caractérisé en ce que les rainures annulaires (13) ne se trouvent que sur le côté non chargé de l'anneau de friction (3) et en ce que leur profondeur est plus faible que la largeur axiale des segments d'anneau (4, 5) dans leur état final d'usure.

3. Disque de frein selon la revendication 1 ou 2, caractérisé en ce qu'il est prévu, à chaque zone de joint (6, 7), une rainure annulaire (13) avec un corps annulaire (14), dont l'axe commun se trouve dans la région médiane de la zone de joint (6, 7) considérée relativement à l'extension radiale de la zone de joint (6, 7) par rapport au disque de frein.

4. Disque de frein selon la revendication 3, caractérisé en ce que le diamètre extérieur de la rainure annulaire (13) correspond à peu près à la moitié de la largeur radiale des segments d'anneau (4, 5).

5. Disque de frein selon la revendication 4, caractérisé en ce que les segments d'anneau (4, 5) sont reliés au corps porteur (disque de roue 2), près des zones de joint (6, 7) et en des points décalés radialement par rapport aux rainures annulaires (13), au moyen d'éléments de fixation essentiellement du type boulon (vis 11, douilles de serrage 12).

6. Disque de frein selon l'une des revendications 3, 4 ou 5, caractérisé en ce que l'anneau de friction (3) est pourvu d'évidements (15) cylindriques, coaxiaux avec les rainures annulaires (13), qui pénètrent respectivement, au moins presque en demi-cylindre, dans les faces frontales (9, 10) opposées l'une à l'autre de deux segments d'anneau (4, 5), dont le diamètre est inférieur au diamètre intérieur des rainures annulaires (13) et qui sont ouverts au moins vers le côté non chargé de l'anneau de friction (3), et en ce qu'un disque circulaire (16) est mis en place dans chaque évidement cylindrique (15) (figures 2, 3), en le remplissant au moins presque entièrement.

7. Disque de frein selon la revendication 6, caractérisé en ce que les évidements cylindriques (15) sont ouverts avec un diamètre réduit vers le côté de l'anneau de friction (3), qui peut être chargé par les mâchoires de frein, et se terminent en étant chanfreinés sur approximativement la profondeur de la zone d'usure de l'anneau de friction (3).

8. Disque de frein selon l'une des revendications 3, 4 ou 5, caractérisé en ce que l'anneau de friction est pourvu d'évidements de forme sphérique, centrés par rapport aux rainures annulaires, qui pénètrent respectivement en hémisphère dans les faces frontales opposées l'une à l'autre de deux segments d'anneau, et dont le diamètre est inférieur au diamètre intérieur des rainures annulaires et en ce qu'une sphère est mise en place dans chaque évidement de forme sphérique, en le remplissant au moins presque entièrement.

9. Disque de frein selon une ou plusieurs des revendications précédentes, caractérisé en ce que les zones de joint (6, 7) présentent, entre les faces frontales (9, 10) en vis-à-vis deux segments d'anneau (4, 5), une fente (18) qui est couverte par le corps annulaire (14) et, dans le cas de la réalisation selon la revendication 5, en plus par le disque circulaire (16).

10. Disque de frein selon la revendication 9, caractérisé en ce que la transition entre la surface d'un segment d'anneau (4, 5), qui peut être chargée par les mâchoires de frein, et la face frontale (9, 10) de celui-ci est chanfreinée au moyen d'une surface oblique (17) (figure 3).

11. Disque de frein selon une ou plusieurs des revendications 1 à 8, caractérisé en ce que les faces frontales (9, 10) en vis-à-vis de deux segments d'anneau (4, 5) s'appliquent l'une sur l'autre dans les zones de joint (6) en engrenant l'une dans l'autre par une denture (figure 4).

12. Disque de frein selon la revendication 11, caractérisé en ce que les deux segments d'anneau (4, 5) sont fabriqués en cassant un corps annulaire, la rugosité de la cassure formant la denture (figure 4).
